(19) Europäisches Patentamt
European Patent Office
Office européen des brevets

(11) Publication number : **0 292 254 B1**

(12) # EUROPEAN PATENT SPECIFICATION

(45) Date of publication of patent specification :
**06.11.91 Bulletin 91/45**

(51) Int. Cl.⁵: **F16B 7/04, E04H 12/18, B64G 9/00**

(21) Application number : **88304484.4**

(22) Date of filing : **18.05.88**

(54) **Erectable structure truss attachment joint.**

(30) Priority : **19.05.87 US 52237**

(43) Date of publication of application :
**23.11.88 Bulletin 88/47**

(45) Publication of the grant of the patent :
**06.11.91 Bulletin 91/45**

(84) Designated Contracting States :
**DE FR GB NL**

(56) References cited :
**EP-A- 0 187 100**
**WO-A-84/01801**
**WO-A-85/04222**
**DE-A- 1 675 649**

(56) References cited :
**FR-A- 1 359 796**
**FR-A- 2 001 656**
**FR-A- 2 337 828**
**US-A- 4 490 064**

(73) Proprietor : **ASTRO AEROSPACE CORPORATION**
**6384 Via Real**
**Carpinteria, CA 93013 (US)**

(72) Inventor : **Marks, Geoff**
**355 Alston Road**
**CA 93108 (US)**

(74) Representative : **Lewis, Samuel Hewitt et al**
**Widenmayerstrasse 4**
**W-8000 München 22 (DE)**

## Description

This invention relates to truss attachment joints suitable for erectable tubular truss structure utilized in space construction.

Assembling structure in outer space has a number of associated problems. For instance, when joining structural truss members, the joint should allow insertion of a truss member into an existing precision structure. Distortions of more than a few thousandths of an inch (2,54 cm) are to be avoided.

The joint should also be sufficiently strong to minimize compliance due to compression of the joint over a large load range. The ability to operate at a variety of temperatures without losing the "preload" as a result of thermal expansion or contraction is also highly desirable. The "preload" is the compressive or tension force applied to a particular part or parts that must be overcome to move the part or to reduce the structural stability of the part. If the joint is unable to maintain its preload, the joint may fail.

Numerous attempts have been made to develop a simple, effective joint but many have had significant drawbacks. For instance, in one prior joint, the ends of the trusses have been provided with grooves for mating engagement with parts of a split lock ring. With the split lock ring placed in the grooves, a sleeve having an angled inner edge is screwed over the split lock ring. The angled edges cause the split lock ring to lock down tightly over the two interlocking ends of the trusses. An alternative design uses a lever and camming surfaces to tighten the joint. While some of these designs permit at least limited rotational alignment, this coupling method is very complicated. In addition, the separate parts such as the split lock ring typically are not attached to either of the trusses prior to assembly and therefore may easily be misplaced or lost. The joints also often have numerous angled exterior edges that may snag on equipment or space suits.

In another prior joint, the ends of the trusses have semi-circular grooves and wedges that form interlocking surfaces and prevent longitudinal displacement of either truss. A spring-loaded pivoting latch inside the joint prevents radial displacement to hold the ends together. While the joints are self-contained, the truss ends also tend to be complex, have several edges for potential snagging, and generally can only be attached in one specific rotational alignment. As a result, the astronaut connecting the joint usually must properly align the truss prior to connecting the joint or the joint cannot be connected.

Yet another prior joint uses a bayonet mount similar to those used for camera lenses. The end of one truss has flanges that are placed over the end of the other truss. A chuck key is used to tighten the flanges against ribs on the exterior wall of the second truss. However, the chuck key and the exterior edges considerably increase the risk of snagging and insertion of the truss usually temporarily distorts the existing structure. Also, the final rotational alignment is restricted to one of the rotational positions afforded by the position of the flanges. While the joint could be designed having several alignment positions, that design would likely require an equal number of flanges and ribs around the truss ends which could complicate and weaken the joint construction.

Known joints having a ball and socket construction, for example those of trailer hitches, can provide rotational alignment. However, joints of this form typically have reduced coupling strength and are subject to increased wear because of movement of the ball in the socket due to rotational compressive and expansive forces. The joint may also distort the existing structure when inserted and there is significant potential for snagging.

In WO84/01801, there is disclosed a joint structure comprising a first, hollow member having an end which abuts a wall of a second member. The first member carries an elongated element having a knob at one of its ends, the knob protruding from the first member and being moveable relative thereto so that the wall of the second member can be held between the knob and the end of the first member, the knob being received in the second member. A similar structure is disclosed in FR-A-2337828.

To minimize crew member fatigue, the joint should be easy to assemble. A temporary snap-action attachment prior to final tightening is very desirable to allow the astronaut to attach the two truss members without concern for alignment and thereafter the astronaut may align the two halves of the joint and create a solid structural attachment of the two trusses without undue force. Unfortunately, prior joints have not met all these objectives.

The present invention provides a joint for joining first and second members together, the joint including a wall carried by the second member, the wall defining first and second opposing faces, a knob carried by the first member and adapted to engage one face of the second member wall and actuating means for actuating the knob, characterised by a piston which is slideably carried by the first member and adapted to engage the face of the second member wall opposite to the one face, the joint being further characterised in that the actuating means simultaneously displaces the knob and the piston relative to one another and relative to the first member so that the wall of the second member is compressively held between the knob and the piston.

Joints in accordance with the present invention allow a truss to be inserted into a existing structure with little, if any, distortion of the structure.

The preferred joint structure embodying the invention provides a means of temporary attachment, the joint being coupled, the truss aligned and then the joint tightened without disturbing that alignment. A preload may be applied to the various parts of the joint sufficient for most, if not all, purposes and not substantially affected by thermal expansion. The preload on the joint may also be sufficient to obtain a structural load path through the joint that is essentially a continuation of the load path passing through the truss and so the joint is able to withstand significant compressive forces. The preferred joint provides a smooth, basically symmetrical external profile with little potential for snagging before or after joining.

In the preferred joint, a piston is held in a casing at one end of a first truss and a knob is connected on the end of a tension rod passing through the piston so that the knob is held out of the casing and slightly away from the end of the piston. A second truss has a chamber at one end formed by a notched retaining wall. The knob is inserted into the chamber to attach the two trusses and the retention wall is thereby placed between the knob and the piston with the tension rod in the notch. This preferred joint may be tightened by an external tool or by an actuator mounted about the joint if it is desirable to erect the structure without the use of tools. When the joint is tightened, a wedge inside the casing pushes against angled faces of the piston on one side and a leaf spring on the other side to create pressure against the piston and the leaf spring. The piston exerts pressure against the outside of the retention wall. The leaf spring pulls the tension rod toward the interior of the casing. This causes the knob to exert pressure against the inside of the retention wall. The compressive pressure of piston and the knob against the retention wall on the end of the second truss holds the two trusses together without significant risk of failure because of wear or loss of preload.

## BRIEF DESCRIPTION OF THE DRAWINGS

The invention may be better understood by reference to the following Detailed Description in conjunction with the attached Drawings wherein :

FIGURE 1 is a perspective view of a space station latticework utilizing an erectable structure attachment joint according to one embodiment of the present invention ;

FIGURE 2 is a side view of the erectable structure attachment joint of FIGURE 1 showing the method of coupling the joint ;

FIGURES 3 and 4 are diagramatic sectional views showing the manner of tightening the joint of FIGURE 1 ;

FIGURE 5 is a cross-sectional view of one embodiment of the joint of FIGURE 1 ;

FIGURE 6 is an exploded view of the joint of FIGURE 1 showing a perspective view of the various parts of the joint ;

FIGURE 7 is a cross-sectional view of an alternate embodiment of an erectable structure attachment joint according to the present invention ;

FIGURE 8 is an exploded perspective view of a sliding actuator for tightening the joint of FIGURE 7 ;

FIGURE 9 is a sectional view of the sliding actuator of FIGURE 8 ;

FIGURE 10 is a sectional view of the sliding actuator taken along the line 10-10 of FIGURE 9;

FIGURES 11-13 are top sectional views taken along the line 11-11 of FIGURE 9 showing an indexing gear used in the actuator of FIGURE 8 ;

FIGURE 14 is a side sectional view of the indexing gear of FIGURES 11-13 ; and

FIGURE 15 is a perspective view of a pivoting actuator for tightening the joint of FIGURE 7.

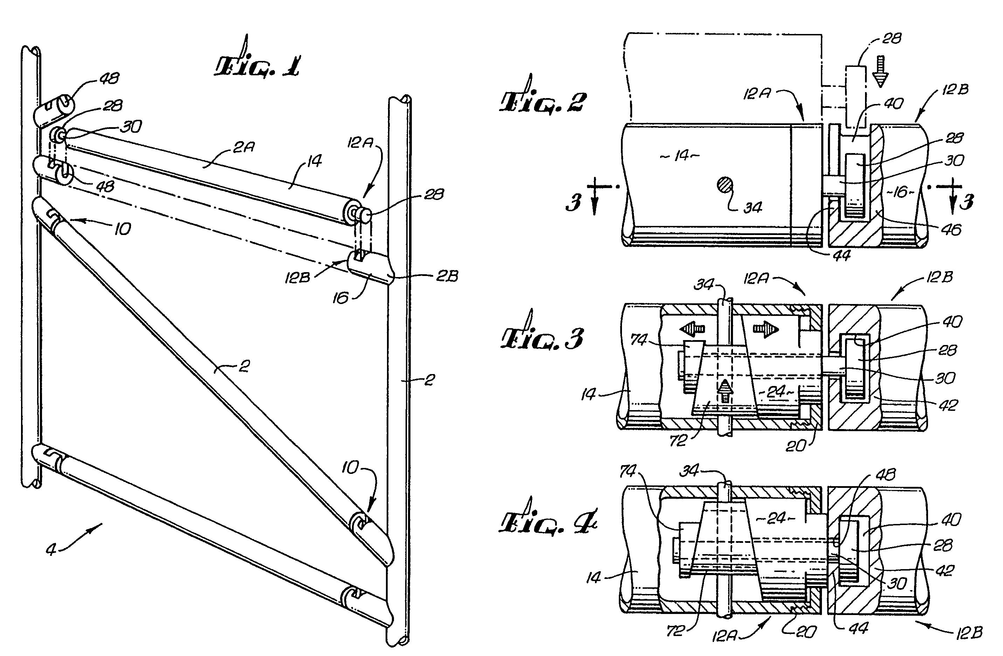

Referring now to the drawings and specifically to FIGURE 1 thereof, a perspective view of a latticework which may be used in the construction of a space station is shown. The latticework comprises numerous trusses 2 that interconnect to form a support structure 4. According to the invention, the trusses 2 are connected by a novel erectable structure truss attachment joint 10. As shown in FIGURE 1, in constructing the latticework, it is often necessary for the trusses 2 to be inserted into the structure 4 without distorting the existing latticework.

The joint 10 comprises two parts, a first part 12A assembled in an attachment casing 14 on the end of an attaching truss 2A and a second part 12B formed in a receiving casing 16 on the end of a receiving truss 2B. The two parts 12A and 12B of the joint 10 are connected as discussed below to joint the two trusses 2A and 2B.

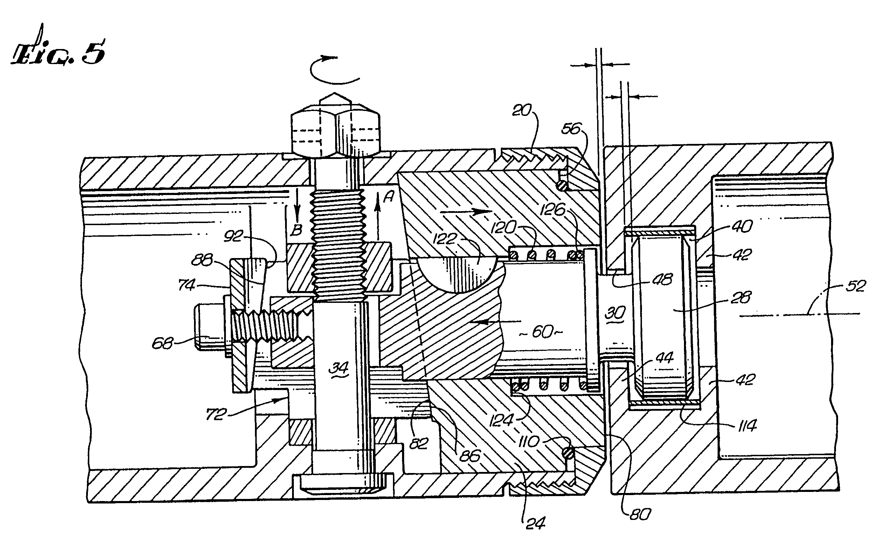

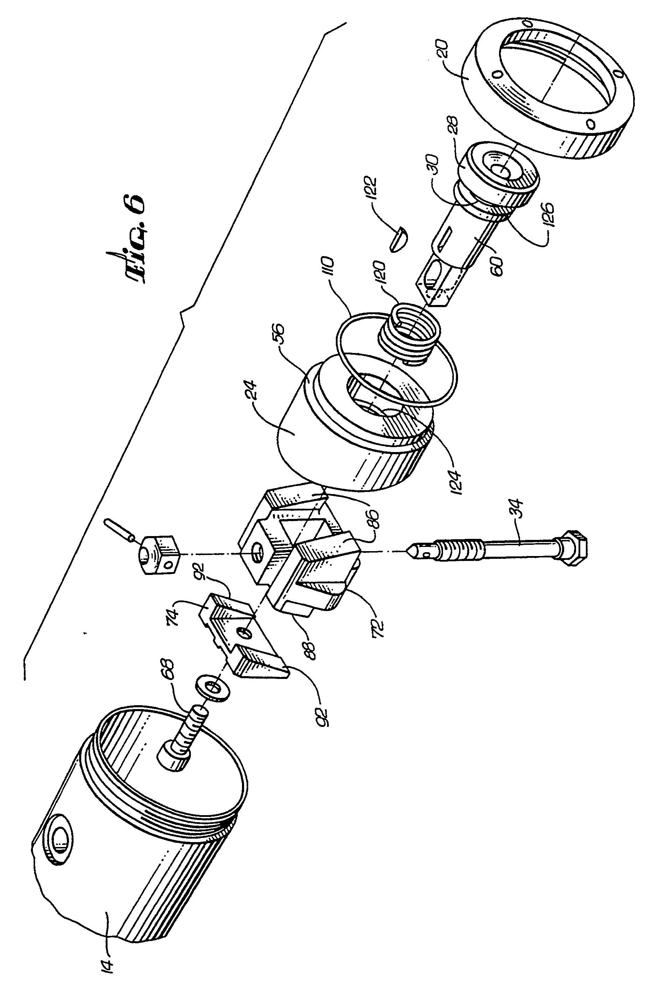

Referring to FIGURE 3, in the first part 12A of the joint 10, toroidal flange 20 is threadably attached to the end of the attachment casing 14. The outer diameter of the flange 20 is approximately equal to the diameter of the truss 2A. The flange 20 extends into the casing 14 and holds a piston 24 inside the casing 14. The piston 24 has a generally cylindrical shape and is used to "lock" parts 12A and 12B together as discussed in more detail below.

FIGURE 2 depicts the attachment of the joint 10 constructed according to one embodiment of the present invention. A generally cylindrical knob 28 that is to be received by the part 12B is held offset from the end of the piston 24 on the end of a neck 30 that extends out of the casing 14 through the center of the piston 24. One end of an adjustment screw 34 is shown flush with the cylindrical wall of the casing 14 and is more fully discussed below.

In the second part 12B of the joint 10, a chamber 40 for receiving the knob 28 is formed between an interior wall 42 and a retention wall 44 in the end of the receiving casing 16. A notch 48 cut down the radius of the retention wall 44 as shown in FIGURE 1 allows communication through the retention wall 44 into the chamber 40.

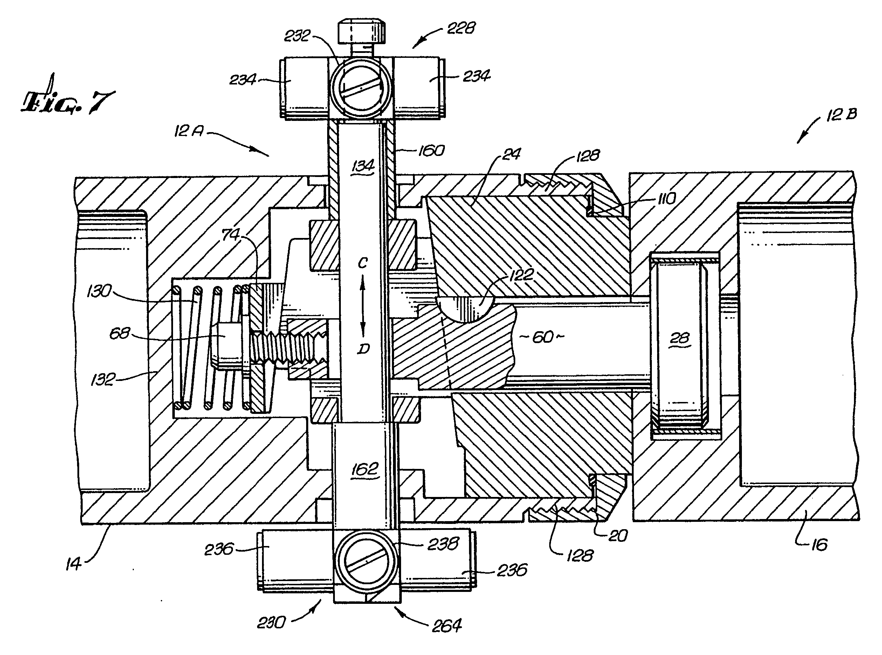

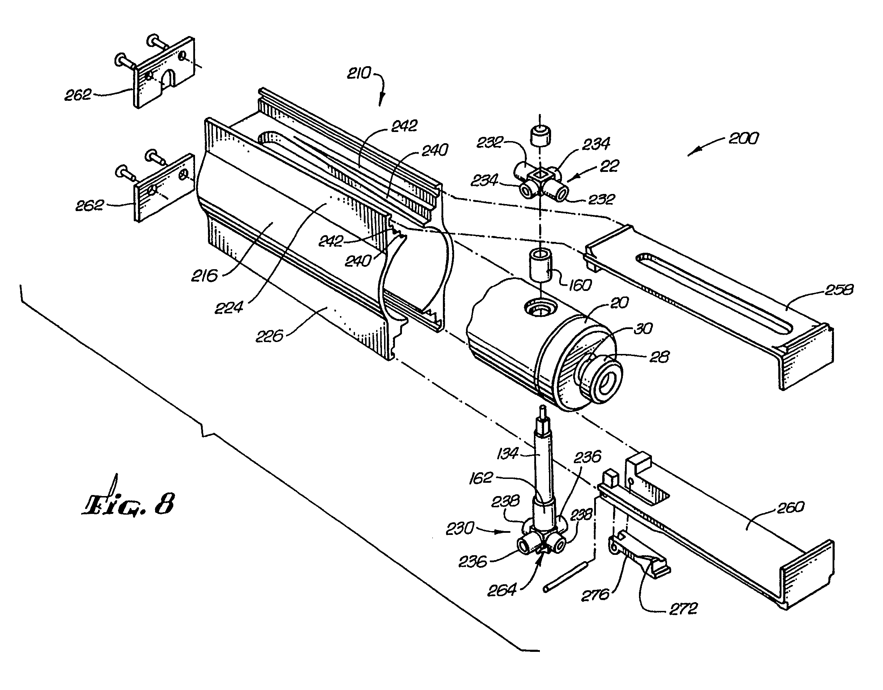

As shown in FIGURE 2, to couple the two parts of the joint 10, the knob 28 is inserted into the chamber 40 and the neck 30 slides into the notch 48. The chamber 40 is large enough to hold the knob 28. The width of the notch 48 is slightly greater than the diameter of the neck 30 so that the neck 30 can slide into the notch 48 when the knob 28 is inserted into the chamber 40. Because the diameter of the knob 28 is greater than the width of the notch 48, the retention wall 44 holds the knob 28 in the chamber 40. The depth of the notch 48 allows the neck 30 to go entirely into the notch 48 and effect proper alignment. When the two parts 12A and 12B of the joint 10 are properly coupled, the casings 14 and 16, trusses 2A and 2B, flange 20, neck 30, knob 28 and piston 24 share a common central axis 52 (see FIGURE 5).

After the joint is coupled, the adjustment screw 34 is tightened by a tool, such as an Allen wrench, to tighten the joint 10 as will be more fully discussed below. Suffice it to say at this point that tightening the adjustment screw 34 causes the piston 24 to exert pressure against the outside of the retention wall 44 and also causes the knob 28 to exert pressure against the inside of the retention wall 44. The opposing pressures exerted on the retention wall 44 hold the parts 12A and 12B of the joint 10 together.

The different positions of the piston 24 and knob 28 can be seen by comparing FIGURES 3 and 4. FIGURE 3 shows the joint 10 in a coupled, untightened condition and FIGURE 4 shows the joint 10 in a tightened condition. Tightening the adjustment screw 34 does not change the combined length of the trusses 2A and 2B more than a few thousands of an inch (2,54 cm) because movement of the piston 24 and knob 28 along the central axis 52 is very short and does not substantially change the relative positions of the casings 14 and 16. By properly designing the clearance between the piston 24 and knob 28 and the thickness of the retention wall 44, the travel of the piston 24 and knob 28 may be extremely short, if desired.

Referring now to FIGURE 5, a cross-sectional view of the joint 10 according to one embodiment of the present invention is shown. The cross-sectional view of FIGURE 5 depicts the parts 12A and 12B of the joint 10 in a connected fashion but prior to tightening the adjustment screw 34.

As shown in FIGURE 5, the inside portion of the flange 20 cooperates with an outside shoulder 56 of the piston 24 to hold the piston 24 inside the casing 14. The knob 28 and neck 30 form one end of a tension rod 60 that extends through a passage down the central axis 52 of the piston 24. The central axis 52 is also the central axis of the tension rod 60.

The other end of the tension rod 60 is threadably attached to an end bolt 68. The tension rod 60 also extends through passages in a wedge 72 and a leaf spring 74. The end bolt 68 and flange 20 hold the piston 24, wedge 72 and leaf spring 74 together inside the casing 14 and around the tension rod 60.

The piston 24 has a generally cylindrical shape with a first, joint abutting end 80 perpendicular to the central axis 52 and a second, angled end 82 forming a bearing surface at an angle to the central axis 52. The second end 82 abuts against a first angled face 86 formed on one side of the wedge 72 at an angle to the central axis 52 that is complementary to the angle of the second end 82 of the piston 24. At least part of the opposite side of the wedge 72 forms a second angled face 88 that abuts against, and is formed at an angle complementary to, a bearing surface 92 on the leaf spring 74. The bearing surfaces are lubricated to provide smooth movement of parts.

The attachment screw 34 extends through the casing 14 and through bores in the wedge 72 and the tension rod 60. The adjustment screw 34 is threadably attached to the wedge 72 so that rotation of the screw 34 one way or the other causes the wedge 72 to more up or down in the direction of the arrows A and B.

When the screw 34 is tightened, the wedge 72 moves upward in the direction shown in arrow A of FIGURE 5. Because of the angled bearing surfaces of the wedge 72 and piston 24, movement of the wedge 72 creates pressure against the piston 24 as schematically depicted in FIGURE 3. The wedge 72 therefore pushes the piston 24 along the central axis 52 a very short distance toward the retention wall 44 of the part 12B. The piston 24 compresses a circular O-ring 110 held between the outside shoulder 56 of the piston 24 and the flange 20 and the first end 80 of the piston 24 pushes against the outside of the retention wall 44.

Movement of the wedge 72 also pushes the leaf spring 74 and the end bolt 68 further into the casing 14. The end bolt 68 pulls the tension rod 60 and thereby causes the knob 28 to exert pressure against the inside of the retention wall 44. The opposing pressures of the piston 24 and knob 28 against both sides of the retention wall 44 hold the two sides 12A and 12B of the joint 10 together.

Preferably, the angle between the central axis 52 of the casing 14 and the first angled face 86 of the wedge 72 is greater than the angle between the central axis 52 and the second face 88 so that the pressure on the leaf spring 74 as a result of movement of the wedge 72 causes greater relative travel of the tension rod 60 than of the piston 24. The angled bearing surfaces are preferably designed to provide a preload on the tension rod 60 when the joint 10 is tightened sufficient to counteract the expected compression load in the assembled space structure. The threaded engagement between the adjustment screw 34 and wedge 72 is preferably torqued so that the wedge 72 applies a preload between the piston 24 and the flange 20 sufficient to withstand the expected compression load in the structure. The preload may be controlled by the design of the angled bearing surfaces on the piston 24, wedge 72 and leaf spring 74 and by the dimensions of the straight abutting surfaces.

The astronaut need not align the trusses 2A or 2B before engagement because the knob 28 and the casings 14 and 16 are all symmetrical. The assembling astronaut may insert the knob 28 into the chamber 40, rotate the casings 14 and 16 to the desired alignment, and then tighten the joint to retain that alignment. Thus alignment to any convenient rotation to tighten the joint 10 or to position the trusses 2A or 2B may be done after the joint 10 is temporarily coupled. Once the joint 10 is tightened, rotation is prevented because of the pressure exerted by the knob 28 and piston 24 against the retention wall 44.

According to one aspect of the present invention, the joint 10 is designed to withstand modest stresses when the two parts 12A and 12B are connected but before the joint 10 is tightened. As shown in FIGURE 5, a tension spring 114 inside the chamber 40 fits around the knob 28 to hold the knob 28 inside the chamber 40 against modest stresses. The tension spring 114 allows a snap-action engagement well within crew member capability. Thus, when the joint 10 is initially connected, the tension spring 114 holds the knob 28 inside the chamber 40 and is able to withstand modest stresses while permitting rotation of the attaching casing 14 and receiving casing 16 to allow proper rotational alignment of the trusses 2A and 2B prior to tightening.

As also shown in FIGURE 5, a helical spring 120 is inserted around the tension rod 60. The helical spring 120 exerts pressure against an inside shoulder 124 of the piston 36 and against the base 126 of the neck 30 of the knob 28 and thereby maintains a limited amount of expansive tension between the piston 24 and tension rod 60. This expansive tension is used as discussed below to uncouple the joint 10.

To release the joint 10, the adjustment screw 34 is rotated in the opposite direction to drive the wedge 72 in the direction of the arrow B and relieve the pressure on the piston 24. The helical spring 120 pushes the tension rod 60 forward (i.e., toward the part 12B) and the compressed O-ring 110 and the helical spring 120 push the piston 24 back (i.e., into the casing 14) to achieve the necessary clearance for disengagement. With the load removed, the knob 28 is retained in the chamber 40 by the tension spring 114.

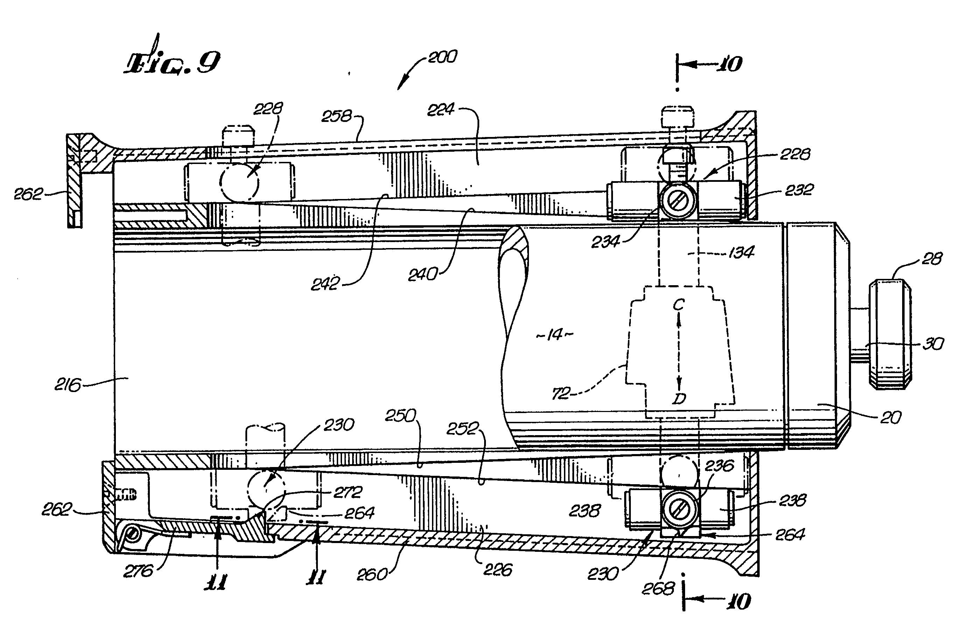

FIGURE 6 depicts an exploded perspective view of the various parts of part 12A of the joint 10 of FIGURE 5. As shown in FIGURE 6, an alignment key 122 is inserted into the tension rod 60 to properly align the rod 60 during assembly of the joint 10. The piston 24 is essentially cylindrical in shape but, of course, has the outside shoulder 56, inside shoulder 124, and the angled second end 82. The wedge 72 contains an oblong passage that permits the tension rod 60 to pass through the wedge 72 and a threaded bore for receiving the adjustment screw 34. The leaf spring 74 is basically rectangular except for the angled bearing surface 92 and the passage for the tension rod 60 and end bolt 68. Of course, other shapes and configurations may be used.

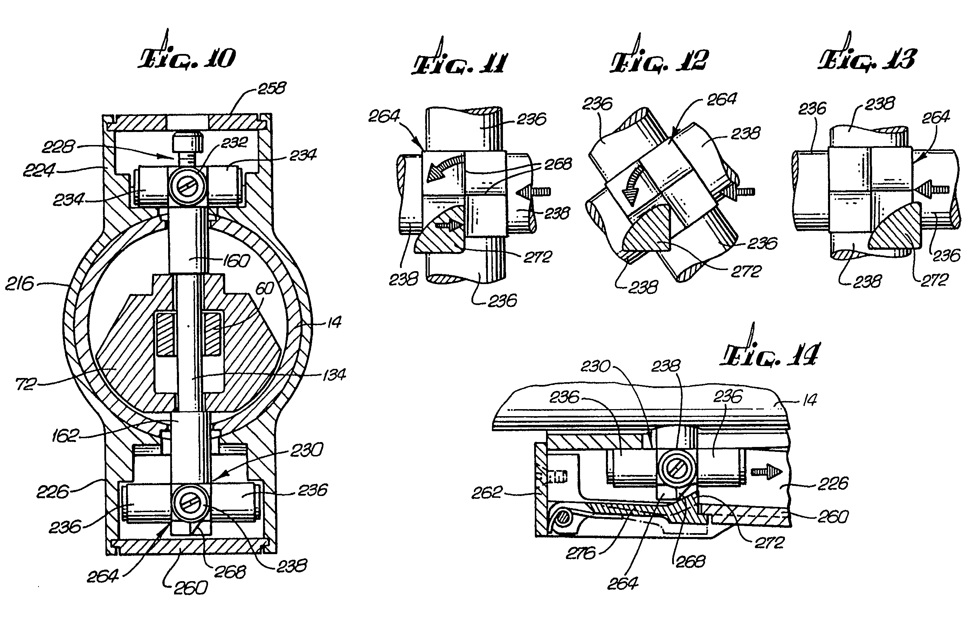

Referring now to FIGURE 7, a cross-sectional view of the joint 10 according to another embodiment of the invention is shown. Because many of the various parts are the same or similar to the parts shown in FIGURES 5 and 6, the same reference numbers are used for the corresponding parts. FIGURE 7 depicts the joint in a tightened condition, wherein the wedge 72 is shifted upwards in FIGURE 7 to exert pressure against leaf spring 74 and piston 24 and thereby tighten the joint. Comparison of FIGURES 5 and 7 shows the difference between the tightened and untightened condition of the joint 10 and further shows that tightening the joint 10 does not substantially affect the length of the truss because the relative positions of casings 14 and 16 do not substantially change. Only the elements of the joint 10 assembled inside the casing 14 move any substantial distance.

As shown in FIGURE 7, the structural load path 128 of the joint 10 passes from the casing 14 to the flange 20 to the outside shoulder 56 to the piston 24 and thence to the retention wall 44 of the casing 16. The load path 128 is through simple butt joints. The structural load path 128 passes through the perimeter of the joint 10, and thus continues the load path of the trusses 2A and 2B. The tension rod 60 is merely a preloading spring and is out of the load path.

According to the embodiment of the invention shown in FIGURE 7, a helical spring 130 is placed between the end bolt 68 and an interior wall 132 of the casing 14. The helical spring 130 performs the same function as the helical spring 120 shown in FIGURE 5 by causing expansive pressure between the wall 132 and the end bolt 68 and tension rod 60 to assist in releasing the joint 10.

The embodiment of the invention shown in FIGURE 7 also includes a tightening bolt 134 in place of the adjustment screw 34 shown in FIGURES 2 and 5. According to the embodiment of the invention shown in FIGURE 7, rather than threadably attaching the tightening bolt 134 to the wedge 72, a cylindrical sleeve 160 around the bolt 134 abuts the top of the wedge 72 and a cylindrical sleeve 162 around the bolt 134 abuts the bottom of the wedge 72. When the tightening bolt 134 is moved in the direction of arrow C of FIGURE 7, the sleeve 162 exerts pressure against the wedge 72 and forces the wedge 72 to move in the direction of the arrow C and thereby tighten the joint 10. When the tightening bolt 134 is moved in the direction of arrow D, the sleeve 160 forces the wedge 72 down to loosen the joint 10.

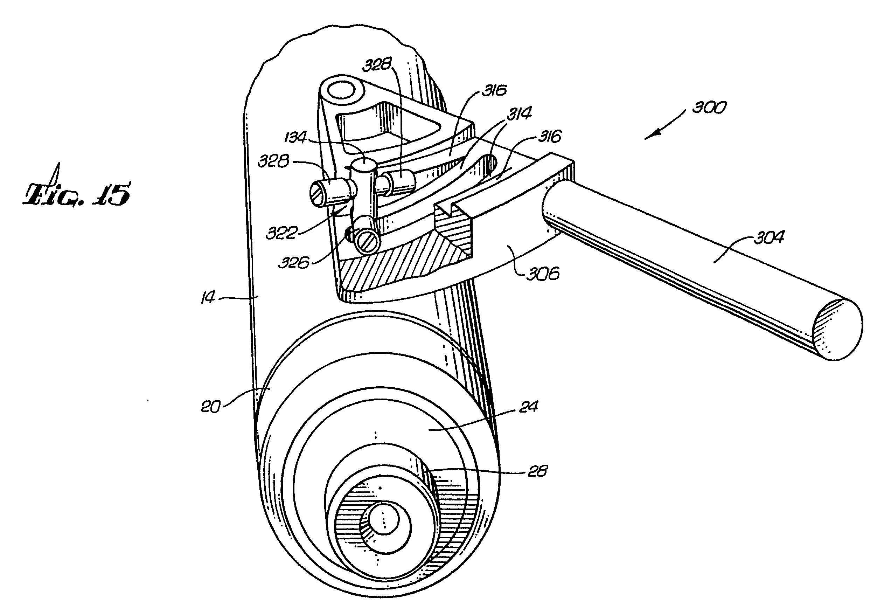

In another aspect of the present invention, the tightening bolt 134 with the sleeves 160 and 162 may be used in cooperation with a hand-operated sliding actuator 200 depicted in FIGURES 8-14. As will be more fully explained below, the actuator 200 causes the tightening bolt 134 to move in the directions of the arrows C and D of FIGURE 7. When the bolt 134 moves, the sleeves 160 and 162 move the wedge 72 to tighten or loosen the joint 10 as described above.

As shown in FIGURES 8 and 9, the actuator 200 comprises a sleeve 210 mounted around the casing 14. The sleeve 210 has a cylindrical center portion 216 supporting two incline-containing appendages 224 and 226.

To enable use of the actuator 200, double cams 228 and 230 are fixed inside the appendages 224 and 226, respectively, on the ends of the tightening bolt 134. Long rollers 232 and short rollers 234 are fixed on the first cam 228. Long rollers 236 and short rollers 238 are fixed on the other cam 230. The axis of rotation of the long rollers 232 is perpendicular to the axis of rotation of the short rollers 234. The axis of rotation of the long rollers 236 is perpendicular to the axis of rotation of the short rollers 238.

The appendage 224 has a pair of inner ramps 240 and a pair of outer ramps 242 formed therein. The appendage 226 also has a pair of inner ramps 250 and outer ramps 252 formed therein. The rollers 232, 234, 236 and 238 act against the ramps 240, 242, 250 and 252 as discussed below to move the tightening bolt 134, and thus the wedge 72, and thereby tighten (or loosen) the joint 10.

The upper edges of the side walls of appendage 226 are inclined to be parallel to the outer ramp 252. A cover plate 258 covers the appendage 224 and a cover plate 260 covers the appendage 226. Two end plates 262 hold the cover plates 258 and 260 on the appendages 224 and 226.

An indexing gear 264 having four inclined teeth 268 separated by 90° is on the end of the second cam 230. As shown in FIGURES 11-13, the teeth 268 on the indexing gear 264 interact with a tooth 272 on the end of a hinged finger 276 mounted in the plate 260 to cause 90° indexing of the cams 228 and 230 when one of the teeth 268 on the gear 264 strikes the tooth 272. The indexing sequence includes a tooth 268 striking the tooth 272 (FIGURE 11), the gear 264 turning (FIGURE 12), and the completion of the 90° indexing (FIGURE 13). FIGURE 14 depicts the curvature on the back side of the teeth 268 that permits the hinged finger 276 to pivot to permit the tooth 268 to pass by the tooth 272 after indexing. FIGURE 14 is basically a side view of the position shown in FIGURE 13.

When the sleeve 210 is slid along the casing 14 in the direction of the knob 28 shown in FIGURE 9, the short rollers 234 roll up the inner ramp 240 and the long rollers 236 roll down the outer ramp 252. At the end of that travel, one of the teeth 268 on the indexing gear 264 strikes the tooth 272 which causes the double cams 228 and 230 to index 90° and brings the rollers 232 and 238 in contact with the ramps 242 and 250, respectively. This position is shown in phantom lines in FIGURE 9. The sleeve 210 is then slid in the opposite direction (i.e., away from the knob 28), the rollers 232 move up the outer ramp 242 and the rollers 238 move down the inner ramp 250. This position is also shown in phantom lines in FIGURE 9.

The movement of the rollers 234 and 232 up the ramps 240 and 242, respectively, and of the rollers 236 and 238 down the ramps 252 and 250, respectively, draws the tightening bolt 134 upward in the direction of arrow C of FIGURES 7 and 9. The sleeve 162 exerts pressure against and therefore moves the wedge 72 to tighten the joint 10 as discussed above. Thus, sliding the sleeve 210 over and back completely tightens the joint 10. When the reverse action is employed, the bolt 134 moves downward and the sleeve 160 moves the wedge 72 in the direction of the arrow D of FIGURES 7 and 9 and loosens the joint 10.

The ramps 240 and 252 are large-angle ramps that provide large travel with little load for lifting the wedge 72 on the opening action of the actuator 200. The ramps 242 and 250 are small-angle ramps to insure a large mechanical advantage during the closing action of the actuator 200 to pull the wedge 72 upward through the shorter but highly loaded part of the travel to insure the preload on the wedge 72 and thus the preload between the piston 24 and flange 20.

FIGURE 15 depicts a hand-operated pivoting actuator 300 that operates in a manner similar to that of the actuator 200 to tighten the tightening bolt 134 in accordance with another embodiment of the invention. The actuator 300 comprises a torquing arm 304 attached to a lever base 306. The lever base 306 has an pair of lower ramps 314 and a pair of upper ramps 316 formed therein. Affixed to one end of the tightening bolt 134 is a double cam 322 having lower inner rollers 326 and upper outer rollers 328 mounted thereon. The double cam 322 is shown resting on the ramp 314. When the torquing arm 304 is pivoted, the rollers 326 roll up the ram 314. At the end of that travel, the cam 322 indexes 90° to cause the rollers 328 to be in contact with the ramps 316. The torquing arm 304 is then pivoted in the opposite direction to pull the tightening bolt 134 through the remainder of its travel and thereby tighten the joint 10. To release the lever 300 and thus the tightening bolt 134, the reverse action is employed.

The lower ramps 314 are large-angle ramps to provide large travel with little load in lifting the wedge 72 on the opening action of the lever 300. The upper ramps 316 are small-angle ramps to insure a large mechanical advantage during the closing action of the lever 300 to pull the tightening bolt 134 and wedge 72 upwards through the shorter but highly loaded part of the travel. The double cam 322 may be designed with rollers 326 and 328 in the same plane rather than in separate planes, as discussed above with respect to the cams 228 and 230 of FIGURES 8-14.

While the invention has been described according to the embodiments shown in FIGURES 1-9, it will be apparent that the invention is capable of numerous modifications, rearrangements, and substitution of parts without departing from the scope of the invention.

The features disclosed in the foregoing description, or the following claims, or the accompanying drawings, expressed in their specific forms or in terms of a means for performing the disclosed function, or a method or process for attaining the disclosed result, as appropriate, may, separately or in any combination of such features, be utilised for realising the invention in diverse forms thereof.

## Claims

1. A joint for joining first and second members (2A, 2B) together, the joint including a wall (44) carried by the second member, said wall defining first and second opposing faces, a knob (28) carried by the first member and adapted to engage one face of the second member wall and actuating means (34, 72) for actuating the knob characterized by a piston (24) which is slideably carried by the first member (2A) and is adapted to engage the face of the second member wall opposite to the one face, the joint being further characterized in that the actuating means simultaneously displace the knob (28) and the piston (24) relative to one another and to the first member so that the wall (44) of the second member is compressively held between the knob and piston.

2. A joint according to Claim 1 wherein the wall (44) of the first member comprises means forming a chamber for engagingly receiving the knob (28).

3. A joint according to Claim 1 or Claim 2 wherein the knob (28) is affixed to one end of a tension rod (60) that extends through the piston (24) and wherein the other end of the tension rod includes an engaging member.

4. A joint according to any preceding Claim wherein the piston (24) further comprises a first joint abutting end (80) and a second end (82) forming a bearing surface.

5. A joint according to Claim 4, as appendant to Claim 3, wherein the actuating means comprises a wedge (72) slideably mounted in the first member and having :

a bearing surface (86) engagingly contacting the second end of the piston and a face opposite the bearing surface and including a spring-abutting bearing surface (88) ;
a leaf spring (74) mounted between the wedge and the engaging member (68) of the tension rod, said leaf spring having an angled bearing surface for engaging the spring-abutting bearing surface of the wedge ; and
means (34) for sliding the wedge to cause the wedge to exert pressure against the piston and the leaf spring ;
wherein, to interconnect the joint, the knob (28) is engaged against one face of the first member wall (44) and the wedge is moved, thereby exerting pressure against the piston (24) and the leaf spring (74) and causing the leaf spring to pull against the second, engaging end of the tension rod (60) and to tighten the joint because of the consequent compressive pressure of the knob and piston against opposing faces of the first member wall.

6. A joint according to Claim 5 wherein the means for sliding the wedge comprises an adjustment screw (34) threadably engaged with the wedge.

7. A joint according to any preceding Claim further comprising a flange (20) mounted on the end of the second member (2B) to hold the piston (24) inside the second member.

8. A structural joint comprising :
a casing (14) having a central axis and a joint-abutting end ;
a tension rod mounted in the casing and comprising :
a body (60) having a first end and a second, engaging end, and
a knob (28) at the first end of the body of the rod and
a receiving member (12B) having a means forming a chamber (40) at one end for engagingiy receiving the knob within the chamber ; characterized by a piston (24) mounted in the casing for movement relative thereto,
a wedge (72) slideably mounted adjacent the piston and comprising :
a bearing surface (86) engagingly contacting a wedge-abutting end (82) of the piston, and
a face opposite the bearing surface and including a spring-abutting bearing surface (88) at an angle oblique to the central axis of the casing ;
a leaf spring (74) mounted between the wedge and the second, engaging end of the tension rod, said leaf spring having an angled bearing surface (92) for engaging the spring-abutting surface of the wedge and
means (34) for moving the wedge to thereby cause the wedge to move to exert pressure against the piston and the leaf spring ;
wherein the wedge-abutting end of the piston is inclined at an oblique angle to the central axis of the casing and the piston has, in addition to the wedge-abutting end, a joint-abutting end perpendicular to the central axis of the casing, whereby, to interconnect the joint, the knob is inserted into the chamber and the wedge is moved, thereby exerting pressure against the piston and the leaf spring and causing the leaf spring to pull against the second, engaging end of the tension rod, and to tighten the joint because of the consequent pressure of the knob and piston against the receiving member.

9. A joint according to Claim 8 further comprising a first truss (2A) containing the casing, a second truss (2B) containing the receiving member, an interior wall (132) within the casing and a spring (13) between the interior wall and the second, engaging end of the tension rod (60).

10. A joint according to Claim 8 or Claim 9 wherein the means forming the chamber includes a notched, circular retention wall (44) forming one end of the receiving member, the notch of the retention wall being dimensioned to receive a portion of the tension rod (60) and permit the knob (28) to enter and remain in the chamber, and the retention wall having a first side in the interior of the receiving member for holding the knob in the chamber and a second side for contacting the joint abutting end of the piston (24) and wherein the joint further comprises means forming a passage in the wedge (72) for slideably receiving the body of the tension rod (60), said passage having a cross-sectional area sufficient to permit the wedge to slide a predetermined distance within the casing (14) in a direction perpendicular to the central axis of the casing.

11. A joint according to Claim 8 wherein said casing (14) is formed in one end portion of a first truss, the casing has a pair of adjustment screw mounting orifices at predetermined positions on opposite sides of a wall of the casing, the body (60) of the tension rod is generally cylindrical and extends through the piston (24), the knob (28) has a diameter greater than the diameter of the body of the rod, the tension rod has an end bolt (68) distal to said knob, that bearing surface (86) of the wedge which contacts the piston is flat and is at a first angle oblique to the central axis of the casing, the leaf spring (74) is between the wedge and the end bolt of the tension rod, whereby the leaf spring exerts pressure against the end bolt of the tension rod when the wedge is moved to tighten the joint, wherein the receiving member (12B) is formed in an end portion of a second truss and the chamber (40) of the receiving member receives the knob slideably and rotatably.

12. A joint according to Claim 11 wherein the wedge (72) further comprises means forming a passage for slideably receiving the second end of the tension rod (60), said passage means having a cross-sectional area sufficient to permit the wedge to slide a predetermined distance within the casing in a direction perpendicular to the central axis of the truss and means forming a bore extending through the wedge at an angle perpendicular to the central axis of the truss and concentric with the two screw mounting orifices, at least a portion of the bore means having a means for threaded engagement.

13. A joint according to Claim 12 wherein the means for moving the wedge (72) comprises an adjustment screw (34) extending from one of said orifice in the casing wall, through the bore means of the wedge, and out the opposing orifice in the casing wall, the adjustment screw being threadably engaged to the wedge so that by rotating the adjustment screw in a predetermined direction, the wedge is moved along a line parallel to the axis of the screw a predetermined distance and by rotating the screw in the other direction, the wedge is moved along the same line in the opposite direction.

14. A joint according to any one of the Claims 11 to 13 wherein the chamber means further comprises a notched, circular retention wall (44), forming one end of the receiving member, the notch of the retention wall being dimensioned to receive a portion of said tension rod (60) and permit said knob (28) to enter and remain in said chamber, and the retention wall having a first side in the interior of the receiving member for holding the knob in the chamber and a second side for contacting the joint abutting end (80) of said piston.

15. A joint according to any one of Claims 11 to 14 further comprising a tension spring (114) in the chamber for engaging the knob (28), a flange (20) mounted on the end of the casing and having a shoulder-abutting surface in the interior of the casing, a compressible O-ring between the shoulder (56) of the piston and the shoulder-abutting surface of the flange (20), means (120) for causing spring tension between the tension rod (60) and the piston (24), an interior wall (132) within the casing and a spring (130) juxtaposed between the interior wall and the end bolt (68), and wherein the piston (24) further comprises a shoulder (56) around the circumference of the joint abutting end for engagement with the shoulder-abutting surface of the flange, means forming a passage through the piston and an inside shoulder (124) in the piston around the passage, wherein the tension rod comprises a neck (30) forming the base of the knob and wherein the means for causing spring tension comprises a spring (120) juxtaposed between the neck of the tension rod and the inside shoulder of the piston and wherein the compressive load path of the joint passes from the casing (14) to the receiving member (16) without passing through the tension rod (60).

16. A joint according to any one of Claims 8 to 11 wherein the means for moving the wedge comprises an adjustment screw (34) threadably engaged to the wedge (72).

17. A joint according to any one of Claims 8 to 11 wherein the means for moving the wedge comprises:

    a tightening bolt (134) passing through the wedge (72) and having wedge-abutting surfaces to contact and exert pressure against the wedge ; and an actuator (200, 300) engagingly connected to the tightening bolt.

18. A joint according to Claim 17 wherein the actuator (200) comprises :

a cylindrical sleeve (210) mounted around the casing (14) ;

a first appendage (224) on one side of the sleeve having a pair of lower inclines (240) and a pair of upper inclines (242) running parallel to the axis of the casing ;

a second appendage (226) on the other side of the sleeve having a pair of lower inclines (250) and a pair of upper inclines (252) running parallel to the axis of the casing ;

a first set of rollers (232, 234) on one end of the tightening bolt contained in the first appendage and comprising a long pair of rollers (232) and a short pair of rollers (234) ; and

a second set of rollers (236, 238) on the other end of the tightening bolt contained in the second appendage and comprising a long pair of rollers (236) and a short pair of rollers (238), the axis of rotation of each of the long pair of rollers and the short pair of rollers being perpendicular ;

wherein by sliding the sleeve in a first direction along the axis of the casing, the short pair (234) of the first set of rollers move up the lower inclines (240) of the first appendage and the long pair (236) of the second set of rollers move down the upper inclines (252) of the second appendage, whereupon the sleeve stops and the tightening bolt rotates 90°, and then by sliding the sleeve in the opposite direction the long pair (232) of the first set of rollers move up the upper inclines (242) of the first appendage and the short pair (238) of the second set of rollers move down the lower inclines (250) of the second appendage, thereby causing the tightening bolt to move the wedge and tighten the joint.

19. A joint according to Claim 18 wherein the lower incline (240) in the first appendage has a steeper grade than the upper incline (242) in the first appendage.

20. A joint according to any one of the Claims 8 to 11 wherein the means for moving the wedge (72) comprises a tightening bolt (134) connected to the wedge and having a dual-action pivoting actuator (300) affixed thereto, said actuator comprising :

a lever base (306) having a pair of lower, inner ramps (314) and a pair of upper, outer ramps (316) ;

a torquing arm (304) attached to the base ; and a double cam (322) having a pair of lower rollers (326) and a pair of upper rollers (328), the axis of rotation of the lower rollers being offset from, and contained in a plane that is perpendicular to, the axis of rotation of the upper rollers ;

wherein by pivoting the torquing arm in a predetermined direction, the lower rollers (326) roll up the lower ramp (314), and at the end of the travel, the cam indexes by 90° and then by pivoting the torquing arm in the opposite direction, the upper rollers (328) roll up the upper ramp (316), thereby causing the tightening bolt to move the wedge and tighten the joint.

## Patentansprüche

1. Verbinder zum Verbinden erster und zweiter Elemente (2A, 2B) miteinander, wobei der Verbinder eine Wand (44), die von dem zweiten Element getragen ist, wobei die Wand erste und zweite gegenüberliegende Seiten festlegt, einen Knopf (28), der von dem ersten Element getragen und dazu ausgelegt ist, mit einer Fläche der zweiten Elementwand in Eingriff zu kommen, und eine Betätigungseinrichtung (34, 72) zum Betätigen des Knopfes umfaßt, gekennzeichnet durch einen Kolben (24), der verschiebbar von dem ersten Element (2A) getragen und dazu ausgelegt ist, mit der Seite der zweiten Elementwand gegenüber der einen Seite in Eingriff zu kommen, wobei der Verbinder ferner dadurch gekennzeichnet ist, daß die Betätigungseinrichtung gleichzeitig den Knopf (28) und den Kolben (24) relativ zueinander und zu dem ersten Element versetzt, so daß die Wand (44) des zweiten Elements unter Druck zwischen dem Knopf und dem Kolben gehalten ist.

2. Verbinder nach Anspruch 1, wobei die Wand (44) des ersten Elementes eine Einrichtung zum Ausbilden einer Kammer umfaßt, um den Knopf (28) eingriffsmäßig aufzunehmen.

3. Verbinder nach Anspruch 1 oder 2, wobei der Knopf (28) an einem Ende einer Zugstange (60) befestigt ist, die sich durch den Kolben (24) hindurch erstreckt, und wobei das andere Ende der Zugstange ein Eingriffselement umfaßt.

4. Verbinder nach einem der vorangehenden Ansprüche, wobei der Kolben (24) ferner ein erstes Verbinderanschlagsende (80) und ein zweites Ende (82) umfaßt, das eine Lagerfläche bildet.

5. Verbinder nach Anspruch 4, sofern abhängig von Anspruch 3, wobei die Betätigungseinrichtung einen Keil (72) umfaßt, der verschiebbar in dem ersten Element angebracht ist, und umfassend :

eine Lagerfläche (86), die in Eingriff das zweite Ende des Kolbens und eine Fläche gegenüber der Lagerfläche kontaktiert und eine Federanlage-Lagerfläche (88) umfaßt ;

eine Blattfeder (74), die zwischen dem Keil und dem Eingriffselement (68) der Zugstange angebracht ist, wobei die Blattfeder eine angewinkelte Lagerfläche für den Eingriff mit der Federanlage-Lagerfläche des Keiles aufweist ;

eine Einrichtung (34) zum Verschieben des Keiles, um zu bewirken, daß der Keil Druck gegen den Kolben und die Blattfeder ausübt ;

wobei, um den Verbinder zu verbinden, der Knopf (28) an eine Fläche der ersten Elementewand (44) gebracht und der Keil bewegt wird, wodurch Druck gegen den Kolben (24) und die Blattfeder (74) ausgeübt und bewirkt wird, daß die Blattfeder Zug auf das zweite Ende für den Eingriff der Zugstange (60) ausübt und den Verbinder anzieht, und zwar wegen des resultierenden komprimierenden Drucks des Knopfes und des Kolbens gegen die gegenüberliegenden Seiten der ersten Elementewand.

6. Verbinder nach Anspruch 5, wobei die Einrichtung zum Verschieben des Keiles eine Einstellschraube (34) umfaßt, die geschraubt mit dem Keil in Eingriff steht.

7. Verbinder nach einem vorangehenden Ansprüche, ferner umfassend einen Flansch (20), der auf dem Ende des zweiten Elements (2B) angebracht ist, um den Kolben (24) innerhalb des zweiten Elementes zu halten.

8. Konstruktiver Verbinder, der umfaßt :

ein Gehäuse (14) mit einer Mittelachse und einem Verbinderanlage-Ende ;

eine Zugstange, die in dem Gehäuse angebracht ist und umfaßt :

einen Körper (60) mit einem ersten Ende und einem zweiten Ende für den Eingriff und

einen Knopf (28) an dem ersten Ende des Körpers der Stange, und

ein Aufnahmeelement (12B), das eine Einrichtung zum Ausbilden einer Kammer (40) an einem Ende zum eingriffsmäßigen Aufnehmen des Knopfes in der Kammer aufweist, gekennzeichnet durch einen Kolben (24), der in dem Gehäuse für eine Relativbewegung dazu angebracht ist,

einen Keil (72), der verschiebbar benachbart dem Kolben angebracht ist und umfaßt :

eine Lagerfläche (86), die eingriffsmäßig ein Keilanlage-Ende (82) des Kolbens kontaktiert, und eine Seite gegenüber der Lagerseite, die eine Federanlage-Lagerfläche (88) mit einem Winkel schräg zu der Mittelachse des Gehäuses umfaßt;

eine Blattfeder (74), die zwischen dem Keil und dem zweiten Ende der Zugstange für den Eingriff angeordnet ist, wobei die Blattfeder eine angewinkelte Lagerfläche (92) für den Eingriff mit der Federanlage-Lagerfläche des Keils aufweist, und eine Einrichtung (34) zum Bewegen des Keils, um dadurch zu bewirken, daß der Keil sich bewegt, um Druck gegen den Kolben und die Blattfeder auszuüben ;

wobei das Keilanlage-Ende (82) des Kolbens mit einem Schrägwinkel zu der Mittelachse des Gehäuses angestellt ist und der Kolben, zusätzlich zu dem Keilanlage-Ende, ein Verbinderanlage-Ende (80) aufweist, und zwar senkrecht zu der Mittelachse des Gehäuses, wodurch, um den Verbinder zu verbinden, der Knopf in die Kammer eingesetzt wird und der Keil bewegt wird, wodurch Druck gegen den Kolben und die Blattfeder ausgeübt und bewirkt wird, daß die Feder Zug auf das zweite Ende der Zugstange für den Eingriff ausübt und den Verbinder anzieht, und zwar wegen des resultierenden Drucks des Knopfes und des Kolbens gegen das Aufnahmeelement.

9. Verbinder nach Anspruch 8, ferner umfassend einen ersten Träger (2A), der das Gehäuse beinhaltet, einen zweiten Träger (2B), der das Aufnahmeelement beinhaltet, eine Innenwand (132) innerhalb des Gehäuses und eine Feder (13) zwischen der Innenwand und dem zweiten Ende der Zugstange (60) für den Eingriff.

10. Verbinder nach Anspruch 8 oder 9, wobei die Einrichtung zum Ausbilden der Kammer eine gekerbte kreisförmige Aufrechterhaltungswand (44) umfaßt, die ein Ende des Aufnahmeelementes bildet, wobei die Kerbe der Aufrechterhaltungswand so ausgelegt ist, daß sie einen Teil der Zugstange (60) aufnimmt und es dem Knopf (28) erlaubt, in die Kammer zu gelangen und darin zu bleiben, und die Aufrechterhaltungswand eine erste Seite in dem Inneren des Aufnahmeelementes zum Halten des Knopfes in der Kammer sowie eine zweite Seite zum Kontaktieren des Verbinderanlage-Endes des Kolbens (24) aufweist und wobei der Verbinder ferner eine Einrichtung umfaßt, die einen Durchgang in dem Keil (72) darstellt, zum gleitenden Aufnehmen des Körpers der Zugstange (60), wobei der Durchgang eine Querschnittsfläche hat, die ausreicht, um es dem Kolben zu erlauben, eine vorbestimmte Wegstrecke innerhalb des Gehäuses (14) in einer Richtung senkrecht zu der Mittelachse des Gehäuses zu gleiten.

11. Verbinder nach Anspruch 8, wobei das Gehäuse (14) in einem Endabschnitt mit einem ersten Träger ausgebildet ist, wobei das Gehäuse ein paar Anbringungsöffnungen für Einstellschrauben an vorbestimmten Positionen auf gegenüberliegenden Seiten einer Wand des Gehäuses aufweist, wobei der Körper (60) der Zugstange im wesentlichen zylindrisch ist und sich durch den Kolben (24) erstreckt, wobei der Knopf (28) einen Durchmesser hat, der größer als der Durchmesser des Körpers der Stange ist, wobei die Zugstange eine Abschlußschraube (68) distal bezüglich des Knopfes aufweist, wobei die genannte Lagerfläche (86) des Keiles, die den Kolben kontaktiert, flach ist und mit einem ersten Winkel schräg bezüglich der Mittelachse des Gehäuses angeordnet ist, wobei die Blattfeder (74) zwischen dem Keil und der Abschlußschraube der Zugstange angeordnet ist, wodurch die Blattfeder Druck gegen die Abschlußschraube der Zugstange ausübt, wenn der Keil bewegt wird, um die Verbindung anzuziehen, wobei das Aufnahme-element (12B) in einem Endabschnitt eines zweiten Trägers ausgebildet ist und die Kammer (40) des Aufnahmeelementes den Knopf gleitbar und drehbar aufnimmt.

12. Verbinder nach Anspruch 11, wobei der Keil (72) ferner eine Einrichtung zum Ausbilden eines Durchgangs zum gleitbaren Aufnehmen des zweiten Endes der Zugstange (60) umfaßt, wobei die Durchgangseinrichtung eine Querschnittsfläche hat, die ausreicht, um es dem Keil zu erlauben, eine vorbestimmte Wegstrecke innerhalb des Gehäuses in einer Richtung senkrecht zu der Mittelachse des Trägers zu gleiten, und eine Einrichtung umfaßt, die eine Bohrung darstellt, welche sich durch den Keil mit einem Winkel senkrecht zu der Mittelachse des Trägers und konzentrisch mit den beiden Anbringungsöffnungen für die Schrauben erstreckt, wobei wenigstens ein Teil der Bohrungseinrichtung eine Einrichtung für schraubenartigen Eingriff umfaßt.

13. Verbinder nach Anspruch 12, wobei die Einrichtung zum Bewegen des Keils (72) eine Einstellschraube (34), die sich von einer Öffnung in der Gehäusewand durch die Bohrungseinrichtung des Keiles und daus der gegenüberliegenden Öffnung in der Gehäusewand erstreckt, wobei die Einstellschraube schraubenmäßig in Eingriff mit dem Keil derart steht, daß bei Drehen der Einstellschraube in einer vorbestimmten Richtung der Keil entlang einer Linie parallel zu der Achse der Schraube eine vorbestimmte Wegstrecke bewegt wird und bei Drehung der Schraube in der anderen Richtung der Keil entlang derselben Linie in der entgegengesetzten Richtung bewegt wird.

14. Verbinder nach einem der Ansprüche 11 bis 13, wobei die Kammereinrichtung ferner eine gekerbte kreisförmige Aufrechterhaltungswand (44) umfaßt, die ein Ende des Aufnahmeelementes bildet, wobei die Kerbe der Aufrechterhaltungswand zum Aufnehmen eines Teils der Zugstange (60) dimensioniert ist und es dem Knopf (28) erlaubt, in die Kammer hineinzugelangen und darin zu bleiben, und die Aufrechterhaltungswand eine erste Seite in dem Inneren des Aufnahmeelementes zum Halten des Knopfes in der Kammer sowie eine zweite Seite zum Kontaktieren des Verbinderanlage-Endes (80) des Kolbens umfaßt.

15. Verbinder nach einem der Ansprüche 11 bis 14, ferner umfassend eine Zugfeder (114) in der Kammer für einen Eingriff mit dem Knopf (28), einen Flansch (20), der auf dem Ende des Gehäuses angebracht ist und eine Schulteranlage-Fläche in dem Inneren des Gehäuses umfaßt, einen kompressiblen O-Ring zwischen der Schulter (56) des Kolbens und der Schulteranlage-Fläche des Flansches (20), eine Einrichtung (120) zum Bewirken einer Federspannung zwischen der Zugstange (60) und dem Kolben (24), eine Innenwand (132) innerhalb des Gehäuses und eine Feder (130), die zwischen der Innenwand und der Abschlußschraube (68) angeordnet ist, und wobei der Kolben (24) ferner umfaßt : eine Schulter (56) um den Umfang des Verbinderanlag-Endes für einen Eingriff mit der Schulteranlage-Fläche des Flansches, eine Einrichtung zum Ausbilden eines Durchgangs durch den Kolben und eine Innenschulter (124) in dem Kolben um den Durchgang herum, wobei die Zugstange einen Hals (30) umfaßt, der die Basis des Knopfes darstellt, und wobei die Einrichtung zum Bewirken von Federspannung eine Feder (120) zwischen dem Hals der Zugstange und der Innenschulter des Kolbens umfaßt und wobei die Linie der kompressiven Last des Verbinders sich durch das Gehäuse (14) zu dem Aufnahmeelement (16) hin erstreckt, ohne durch die Zugstange (60) zu verlaufen.

16. Verbinder nach einem der Ansprüche 8 bis 11, wobei die Einrichtung zum Bewegen des Keiles eine Einstellschraube (34) umfaßt, die in schraubenmäßigem Eingriff mit dem Keil (32) steht.

17. Verbinder nach einem der Ansprüche 8 bis 11, wobei die Einrichtung zum Bewegen des Keiles folgendes umfaßt folgendes umfaßt :

eine Befestigungsschraube (134), die sich durch den Keil (72) erstreckt und eine Keilanlage-Fläche aufweist, um den Keil zu kontaktieren und Druck darauf auszuüben ; und

einen Betätiger (200, 300), der eingriffsmäßig verbunden ist, um die Schraube anzuziehen.

18. Verbinder nach Anspruch 17, wobei der Betätiger (200) umfaßt :

eine zylindrische Hülse (210), die um das Gehäuse (14) herum angebracht ist,

einen ersten Ansatz (224) auf einer Seite der Hülse mit einem Paar unterer Abschrägungen (240) und einem Paar oberer oberer Abschrägungen (242) parallel zu der Achse des Gehäuses verlaufend ;

einen zweiten Ansatz (226) auf der anderen Seite der Hülse mit einem Paar unterer Abschrägungen (250) und einem Paar oberer Abschrägungen (252), parallel zu der Achse des Gehäuses verlaufend ;

einen ersten Satz Walzen (232, 234) auf einem Ende der Befestigungsschraube, umgeben von dem ersten Ansatz und ein Paar langer Walzen (232) sowie ein Paar kurzer Walzen (234) umfassend ; und

einen zweiten Satz Walzen (236, 238) auf dem anderen Ende der Befestigungsschraube, von dem zweiten Ansatz umgeben und ein Paar langer Walzen (236) sowie ein Paar kurzer Walzen (238) umfassend, wobei die Drehachsen des Paares langer Walzen und des Paares kurzer Walzen jeweils senkrecht aufeinander stehen ;

wobei durch Verschieben der Hülse in einer ersten Richtung entlang der Achse des Gehäuses das kurze Paar (234) des ersten Satzes Walzen die unteren Abschrägungen (240)

des ersten Ansatzes herauflläuft und das lange Paar (236) des zweiten Satzes Walzen die oberen Abschrägungen (252) des zweiten Ansatzes herunterläuft, wodurch die Hülse stoppt und die Befestigungsschraube sich um 90° dreht, und dann durch Verschieben der Hülse in der entgegengesetzten Richtung das lange Paar (232) des ersten Satzes Walzen die oberen Abschrägungen (282) des ersten Ansatzes herauflläuft und das kurze Paar (238) des zweiten Satzes Walzen die unteren Abschrägungen (250) des zweiten Ansatzes herunterläuft, wodurch ein Festziehen der Schraube bewirkt wird, um den Keil zu bewegen und die Verbindung anzuziehen.

19. Verbinder nach Anspruch 18, wobei die untere Abschrägung (240) in dem ersten Ansatz eine steilere Neigung als die obere Abschrägung (242) in dem ersten Ansatz aufweist.

20. Verbinder nach einem der Ansprüche 8 bis 11, wobei die Einrichtung zum Bewegen des Keils (72) eine Befestigungsschraube (134) umfaßt, die mit dem Keil verbunden ist und einen Schwenkbetätiger (300) mit Doppelfunktion umfaßt, der daran angebracht ist, wobei der Betätiger folgendes aufweist :

eine Hebelbasis (306) mit einem Paar unterer innerer Rampen (314) und einem Paar oberer äußerer Rampen (316) ;

einem Hebelarm (304), der an der Basis angebracht ist ; und

einen Doppelnocken (322) mit einem Paar unterer Walzen (326) sowie einem Paar oberer Walzen (328), wobei die Drehachse der unteren Walzen bezüglich der Drehachse der oberen Walzen versetzt ist und sich in einer Ebene erstreckt, die zu der Drehachse der oberen Walzen senkrecht liegt ;

wobei durch Schwenken des Hebelarms in einer vorbestimmten Richtung die unteren Walzen (326) die untere Rampe (314) herauffrollen und an dem Ende ihrer Bewegung der Nocken bei 90° steht und dann durch Schwenken des Hebelarms in der entgegengesetzten Richtung die oberen Walzen (328) die obere Rampe (316) herauffrollen, wodurch bewirkt wird, daß die Befestigungsschraube den Keil bewegt und den Verbinder anzieht.

**Revendications**

1. Jonction pour assembler des premier et second éléments (2A 2B) l'un à l'autre, cette jonction comprenant une paroi (44) supportée par le second élément, ladite paroi définissant les premières et secondes faces opposées, le bouton (28) supporté par le premier élément et adapté pour venir porter contre une des faces de la paroi du second élément et un moyen d'actionnement (34, 72) pour actionner les boutons, caractérisée par un piston (24) qui est supporté de façon coulissante par le premier élément (2A) et qui est adapté pour venir porter contre la face du second élément opposée à la face mentionnée en premier, la jonction étant en outre caractérisée en ce que le moyen d'actionnement déplace simultanément le bouton (28) et le piston (24) l'un par rapport à l'autre et par rapport au premier élément de sorte que la paroi (44) du second élément se trouve maintenue comprimée entre le bouton et le piston.

2. Jonction selon la revendication 1, dans laquelle la paroi (44) du premier élément comprend un moyen formant une chambre destinée à recevoir, de façon assemblée, le bouton (28).

3. Jonction selon la revendication 1 ou la revendication 2, dans laquelle le bouton (28) est fixé à une des extrémités d'une barre de traction (60) qui s'étend à travers le piston (24), l'autre extrémité de la barre de traction comprenant un élément d'engagement ou d'assemblage.

4. Jonction selon l'une quelconque des revendications précédentes, dans laquelle le piston (24) comprend, en outre, une première extrémité (80) d'aboutement de jonction et une seconde extrémité (82) formant une surface d'appui.

5. Jonction selon la revendication 4, telle que rattachée à la revendication 3, dans laquelle le moyen d'actionnement comprend un coin (72) monté de façon coulissante dans le premier élément et comportant :

une surface d'appui (86) en contact d'engagement avec la seconde extrémité du piston et une face située en face de la surface d'appui et comprenant une surface d'appui (88) butant contre un ressort.

un ressort plat (74) monté entre le coin et l'élément d'assemblage (68) de la barre de traction, ledit ressort plat comportant une surface d'appui inclinée destinée à porter contre la surface d'appui, butant contre un ressort, du coin ; et

un moyen (34) pour faire coulisser le coin de manière que le coin exerce une pression contre le piston et contre le ressort plat ;

jonction dans laquelle, pour accoupler celle-ci, le bouton (28) est engagé contre une des faces de la paroi (44) du premier élément et le coin est déplacé, en exerçant ainsi une pression contre le piston (24) et le ressort plat (74) et en faisant en sorte que le ressort plat exerce une traction sur la seconde extrémité d'assemblage de la barre de traction (60) et bloque la jonction en raison de la pression résultante du bouton et du piston contre les faces opposées de la paroi du premier élément.

6. Jonction selon la revendication 5, dans laquelle le moyen pour faire coulisser le coin comprend une vis de réglage (34) se vissant dans le coin.

7. Jonction selon l'une quelconque des revendications précédentes comprenant en outre un collet (20) monté sur l'extrémité du second élément (2B) pour maintenir le piston (24) à l'intérieur du second élément.

8. Jonction structurale comprenant :

un boîtier (14) comportant un axe central et une extrémité d'aboutement de jonction ;

une barre de traction montée dans le boîtier et comprenant :

un corps (60) comportant une première extrémité et une seconde extrémité d'assemblage, et

un bouton (28) à la première extrémité du corps de la barre et

un élément récepteur (12B) comportant un moyen formant une chambre (40) à une de ses extrémités pour recevoir de façon assemblée le bouton à l'intérieur de la chambre ; caractérisé par un piston (24) monté dans le boîtier en vue d'un déplacement par rapport à ce dernier,

un coin (72) monté de façon coulissante au voisinage du piston et comprenant :

une surface d'appui (86) en contact d'engagement avec une extrémité (82) du piston portant contre le coin, et

une face en regard de la surface d'appui et comprenant une surface d'appui butant contre un ressort et faisant un angle oblique par rapport à l'axe central du boîtier ;

un ressort plat (74) monté entre le coin et la seconde extrémité d'engagement de la barre de traction, ledit ressort plat comportant une surface d'appui inclinée (92) destinée à venir porter contre la surface du coin qui butte contre un ressort et,

un moyen (34) pour déplacer le coin de manière que le coin se déplace pour exercer une pression contre le piston et le ressort plat ;

jonction dans laquelle l'extrémité (82) du piston, qui butte contre un coin, est oblique par rapport à l'axe central du boîtier et le piston comporte, en plus de l'extrémité butant contre le coin, une extrémité (80) d'aboutement de jonction perpendiculaire à l'axe central du boîtier, grâce à quoi, pour accoupler la jonction, le bouton est inséré dans la chambre et le coin est déplacé en exerçant ainsi une pression contre le piston et le ressort plat et en amenant le ressort plat à exercer une traction sur la seconde extrémité d'engagement de la barre de traction et à bloquer la jonction en raison de la pression résultante du bouton du piston contre l'élément récepteur.

9. Jonction selon la revendication 8, comprenant en outre une première membrure (2A) contenant le boîtier, une seconde membrure (2B) contenant l'élément récepteur, une paroi intérieure (132) à l'intérieur du boîtier et un ressort (13) entre la paroi intérieure et la seconde extrémité d'assemblage de la barre de traction (60).

10. Jonction selon la revendication 8 ou la revendication 9, dans laquelle le moyen formant la chambre comprend une paroi de retenue circulaire et encochée (44) formant une des extrémités de l'élément récepteur, l'encoche de la paroi de retenue étant dimensionnée pour recevoir une partie de la barre de traction (60) et pour permettre au bouton (28) de pénétrer et de rester dans la chambre, et la paroi de retenue comportant un premier côté situé à l'intérieur de l'élément récepteur pour maintenir le bouton dans la chambre et un second côté pour venir en contact avec l'extrémité d'aboutement de jonction du piston (24), ladite jonction comprenant en outre un moyen formant un passage dans le coin (72) pour recevoir de façon coulissante le corps de la barre de traction (60), ledit passage ayant une superficie de section droite suffisante pour permettre au coin de glisser sur une distance prédéterminée à l'intérieur du boîtier (14) dans une direction perpendiculaire à l'axe central du boîtier.

11. Jonction selon la revendication 8, dans laquelle le boîtier (14) est formé dans une partie d'extrémité d'une première membrure et, le boîtier comporte une paire d'orifices de montage de vis de réglage à des positions prédéterminées sur les côtés opposés d'une paroi du boîtier, le corps (60) de la barre de traction est cylindrique d'une façon générale et s'étend à travers le piston (24), le bouton (28) a un diamètre supérieur au diamètre du corps de la barre, la barre de traction comporte une vis d'extrémité (68) située à l'opposé dudit bouton, la surface d'appui (86) du coin qui est en contact avec le piston est plate et est oblique par rapport à l'axe central du boîtier, le ressort plat (74) est disposé entre le coin et la vis d'extrémité de la barre de traction, grâce à quoi le ressort plat exerce une pression contre la vis d'extrémité de la barre de traction lorsque le coin est déplacé pour bloquer la jonction, et l'élément récepteur (12B) est formé dans une partie d'extrémité d'une seconde membrure et la chambre (40) de l'élément récepteur reçoit le bouton de façon coulissante et tournante.

12. Jonction selon la revendication 11, dans laquelle le coin (72) comprend, en outre, un moyen formant un passage pour recevoir de façon coulissante la seconde extrémité de la barre de traction (60), ledit moyen formant passage ayant une superficie de section droite suffisante pour permettre au coin de coulisser sur une distance prédéterminée à l'intérieur du boîtier dans une direction perpendiculaire à l'axe central de la membrure et un moyen formant un trou s'étendant à travers le coin, perpendiculairement à l'axe central de la membrure et concentriquement aux deux orifices de montage de vis, au moins une partie dudit trou comportant un moyen pour un assemblage par vissage.

13. Jonction selon la revendication 12, dans laquelle le moyen pour déplacer le coin (72) comprend une vis de réglage (34) s'étendant depuis un des orifices de la paroi du boîtier à travers ledit trou du coin et hors des orifices opposés de la paroi du boîtier, la vis de réglage étant vissée dans le coin de manière que, si on fait tourner la vis de réglage dans un sens prédéterminé, le coin est déplacé le long d'une ligne parallèle à l'axe de la vis sur une distance prédéterminée et, si on fait tourner la vis dans l'autre sens, le coin va être déplacé le long de la même ligne dans la direction opposée.

14. Jonction selon l'une quelconque des revendications 11 à 13, dans laquelle le moyen formant chambre comprend, en outre, une paroi de retenue circulaire encochée (44) constituant une des extrémités de l'élément récepteur, l'encoche de la paroi de retenue étant dimensionnée de manière à recevoir une partie de la barre de traction (60) et à permettre au bouton (28) de pénétrer et de rester dans ladite chambre, et la paroi de retenue comportant un premier côté à l'intérieur de l'élément récepteur pour maintenir les boutons dans la chambre et un second côté pour venir en contact avec l'extrémité (80) d'aboutement de jonction et dudit piston.

15. Jonction selon l'une quelconque des revendications 11 à 14, comprenant en outre un ressort de traction (114) dans la chambre destinée à recevoir le bouton (28), un collet (20) monté sur l'extrémité du boîtier et comportant une surface, butant contre un épaulement, à l'intérieur du boîtier, un joint torique compressible entre l'épaulement (56) et le piston et la surface, butant contre l'épaulement, du collet (20), un moyen (120) pour provoquer la traction du ressort entre les têtes de la barre de traction (60) et le piston (24), une paroi intérieure (132) à l'intérieur du boîtier et un ressort (130) juxtaposé entre la paroi intérieure et la vis d'extrémité (68), le piston (24) comprenant en outre un épaulement (36) autour de la circonférence de l'extrémité d'aboutement de jonction pour porter contre la surface, butant contre un épaulement, du collet, un moyen formant un passage à travers le piston, et un épaulement intérieur (124) dans le piston autour du passage, la barre de traction comprenant un étranglement (30) formant la base du bouton et le moyen de signal pour provoquer la traction du ressort comprenant un ressort (120) juxtaposé entre l'étranglement de la barre de traction et l'épaulement intérieur du piston et le trajet de la charge de compression de la jonction allant du boîtier (14) jusqu'à l'élément récepteur (16) sans passer par la barre de traction (60).

16. Jonction selon l'une quelconque des revendications 8 à 11, dans laquelle les moyens servant à déplacer le coin comprennent une vis de réglage (34) se vissant dans le coin (72).

17. Jonction selon l'une quelconque des revendications 8 à 11, dans laquelle le moyen pour déplacer le coin comprend :

une vis de blocage (134) traversant le coin (72) et comportant des surfaces, butant contre le coin, pour contacter ce coin et exercer une pression contre celui-ci ;

un actionneur (200, 300) en prise avec la vis de blocage.

18. Jonction selon la revendication 17, dans laquelle l'actionneur (200) comprend ;

un manchon cylindrique (210) monté autour du boîtier (14) ;

un premier accessoire (224) sur un des côtés du manchon, comportant une paire de plans inclinés inférieurs (240) et une paire de plans inclinés supérieurs (242) s'étendant parallèlement à l'axe du boîtier ;

et un second accessoire (126) sur l'autre côté du manchon comportant une paire de plans inclinés inférieurs (250) et une paire de plans inclinés supérieurs (252) s'étendant parallèlement à l'axe du boîtier ;

un premier ensemble de rouleaux (232, 234) sur une des extrémités de la vis de blocage, cet ensemble étant contenu dans le premier accessoire et comprenant une longue paire de rouleaux (232) et une courte paire de rouleaux (234) et un second ensemble de rouleaux (236, 238) sur l'autre extrémité de la vis de blocage, cet ensemble étant contenu dans le second accessoire et comprenant une longue paire de rouleaux (236) et une courte paire de rouleaux (238), l'axe de rotation d'une desdites longue paire de rouleaux et courte paire de rouleaux étant perpendiculaire à l'axe de rotation de l'autre desdites paires ;

jonction dans laquelle, lorsque le manchon coulisse dans une première direction le long de l'axe du boîtier, la courte paire (234) du premier ensemble de rouleaux monte le long des plans inclinés inférieurs (140) du premier accessoire et la longue paire (236) du second ensemble de rouleaux descend le long des plans inclinés supérieurs (252) du second accessoire, après quoi le manchon s'arrête et la vis de blocage tourne de 90° puis lorsque le manchon coulisse dans la direction opposée, la longue paire (232) du premier ensemble de rouleaux monte le long des plans inclinés supérieurs (242) du premier accessoire et la courte paire (238) du second ensemble de rouleaux descend le long des plans inclinés inférieurs (250) du second accessoire, en amenant ainsi la vis de blocage à déplacer le coin et à bloquer la jonction.

19. Jonction selon la revendication 18, dans laquelle le plan incliné inférieur (240) du premier accessoire présente une pente plus prononcée que le plan incliné supérieur (242) du premier accessoire.

20. Jonction selon l'une quelconque des revendications 8 à 11, dans laquelle le moyen pour déplacer le coin (72) comprend une vis de blocage (134) montée sur le coin et comportant un actionneur (300) pivotant à double actions qui y est fixé, ledit actionneur comprenant :

une base (306) de levier comportant une paire de rampes inférieures intérieures (314) et une paire de rampes supérieures extérieures (316) ;

un bras (304) d'application de couple fixé à la base ; et

une came double (322) comportant une paire de rouleaux inférieurs (326) et une paire de rouleaux supérieurs (328), l'axe de rotation des rouleaux inférieurs étant décalé par rapport à un plan et contenu dans ce plan qui est perpendiculaire à l'axe de rotation des rouleaux supérieurs ;

jonction dans laquelle lorsque le bras d'application de couple pivote dans un sens prédéterminé, les rouleaux inférieurs (326) montent le long de la rampe inférieure (314) et, à la fin de leur course, la canne avance de 90° et, lorsque le bras d'application de couple pivote dans le sens opposé, les rouleaux supérieurs (328) montent le long de la rampe supérieure (316) en amenant ainsi la vis de blocage à déplacer le coin et à bloquer la jonction.

*Fig. 1*

*Fig. 2*

*Fig. 3*

*Fig. 4*

EP 0 292 254 B1

Fig. 5

EP 0 292 254 B1

Fig. 6

Fig. 7

Fig. 8

Fig.9

FIG. 10

FIG. 11

FIG. 12

FIG. 13

FIG. 14

EP 0 292 254 B1

FIG. 15